# EUROPEAN PATENT APPLICATION

(11) **EP 4 447 589 A1**
(43) Date of publication of application: **16.10.2024**
(21) Application number: 23794870.8
(22) Date of filing: 21.03.2023
(51) Int. Cl.: H04W 72/04

(54) **SIGNALING SENDING METHOD, SIGNALING RECEIVING METHOD, COMMUNICATION NODE, AND STORAGE MEDIUM**

(30) Priority: 28.04.2022 CN 202210471316
(71) Applicant: ZTE Corporation, Shenzhen, Guangdong 518057 (CN)
(72) Inventor: LIU, Wenfeng, Shenzhen, Guangdong 518057 (CN); WANG, Yuxin, Shenzhen, Guangdong 518057 (CN); ZHENG, Guozeng, Shenzhen, Guangdong 518057 (CN); LU, Zhaohua, Shenzhen, Guangdong 518057 (CN); XIAO, Huahua, Shenzhen, Guangdong 518057 (CN); LI, Yong, Shenzhen, Guangdong 518057 (CN); LI, Lun, Shenzhen, Guangdong 518057 (CN)
(74) Representative: Aipex B.V.
(86) International application number: PCT/CN2023/082841
(87) International publication number: WO 2023/207435

(57) **Abstract**

Provided are a signaling sending method, a signaling receiving method, a communication node, and a storage medium. The signaling sending method includes sending a first signaling to a second communication node, where the first signaling is configured to instruct the second communication node to report channel state information, CSI, and timestamp information on one or more timestamps; and receiving the CSI and the timestamp information reported by the second communication node.

## Description

### TECHNICAL FIELD

The present application relates to the field of communication technology, for example, a signaling sending method, a signaling receiving method, a communication node, and a storage medium.

### BACKGROUND

With the rapid development of wireless communication technology, millimeter wave frequency bands will gradually become an important frequency band of the wireless communication system in the future. To overcome the problem of harsh propagation conditions in the millimeter wave band, it is usually necessary to perform beamforming on the millimeter wave frequency band and concentrate the signal energy in a small angular space to form a beam with a greater gain. The beam management achieves optimal transmission performance by establishing and maintaining a suitable beam pair to align the beam directions of a transmit end and a receive end. The beam management is essential to the millimeter wave communication system, including beam scanning, beam measurement, beam reporting, and beam indication. However, a beam training scheme needs to perform exhaustive scanning on all transmit and receive beams in a predetermined analog beam codebook, resulting in excessive training overhead, excessive measurement power consumption, and processing delays.

### SUMMARY

Embodiments of the present application provide a signaling sending method. The signaling sending method is applied to a first communication node and includes the following.

A first signaling is sent to a second communication node, where the first signaling is configured to instruct the second communication node to report channel state information (CSI) and timestamp information on one or more timestamps. The CSI and the timestamp information reported by the second communication node are received.

Embodiments of the present application provide a signaling receiving method. The signaling receiving method is applied to a second communication node and includes the following.

A first signaling sent by a first communication node is received, where the first signaling is configured to instruct the second communication node to report channel state information (CSI) and timestamp information on one or more timestamps. The CSI and the timestamp information are reported to the first communication node.

Embodiments of the present application provide a communication node. The communication node includes a processor that is configured to, when executing a computer program, implement the preceding signaling sending method or signaling receiving method.

Embodiments of the present application also provide a computer-readable storage medium storing a computer program that, when executed by a processor, implements the preceding signaling sending method or signaling receiving method.

### BRIEF DESCRIPTION OF DRAWINGS

FIG. 1 is a diagram of a P-2 beam management process.
FIG. 2 is a diagram of a P-3 beam management process.
FIG. 3 is a diagram illustrating the networking of a wireless communication system according to an embodiment.
FIG. 4 is a flowchart of a signaling sending method according to an embodiment.
FIG. 5 is a flowchart of a signaling receiving method according to an embodiment.
FIG. 6 is a diagram of beam prediction according to an embodiment.
FIG. 7 is a diagram of another beam prediction according to an embodiment.
FIG. 8 is a diagram of an activation cycle and a deactivation cycle according to an embodiment.
FIG. 9 is a diagram of another activation cycle and another deactivation cycle according to an embodiment.
FIG. 10 is a diagram of a periodic CSI-RS resource according to an embodiment.
FIG. 11 is a diagram of CSI-RS resources in the case of spatial domain beam prediction according to an embodiment.
FIG. 12 is a diagram of a CSI-RS resource subset in the case of time domain beam prediction according to an embodiment.
FIG. 13 is a diagram of a CSI-RS resource subset that combines spatial domain beam prediction and time domain beam prediction according to an embodiment.
FIG. 14 is a diagram illustrating the structure of a signaling sending apparatus according to an embodiment.
FIG. 15 is a diagram illustrating the structure of a signaling receiving apparatus according to an embodiment.
FIG. 16 is a diagram illustrating the structure of a base station according to an embodiment.
FIG. 17 is a diagram illustrating the structure of UE according to an embodiment.

### DETAILED DESCRIPTION

It should be understood that the embodiments described herein are only intended to explain the present application. Embodiments of the present application are described hereinafter in detail in conjunction with drawings.

With the rapid development of wireless communication technology, low-frequency band resources are becoming increasingly tight, and millimeter wave frequency bands with more spectrum resources and bandwidth will gradually become an important frequency band of the wireless communication system in the future. However, the wavelength of the millimeter wave band is shorter, and propagation conditions of the millimeter wave band are much harsher than the traditional frequency band below 6 GHz. Problems such as high path loss and sensitivity to blocking exist. To overcome the problem, millimeter wave signals usually need to be beamformed to concentrate the signal energy in a small angular space to form a beam with a greater gain. The beam management achieves optimal transmission performance by establishing and maintaining a suitable beam pair to align the beam directions of a transmit end and a receive end. The beam management is essential to the millimeter wave communication system, including beam scanning, beam measurement, beam reporting, and beam indication.

The beam scanning is a process where a base station or user equipment (UE) sequentially uses different simulated beams to cover a spatial area. During beam scanning, the base station or the

UE sequentially sends beams from an entire codebook or codebook subset to find a good transmit and receive beam pair for data and a control channel. The process of beam scanning mainly includes the process of a transmit beam scanning P-2 and the process of a receive beam scanning P-3.

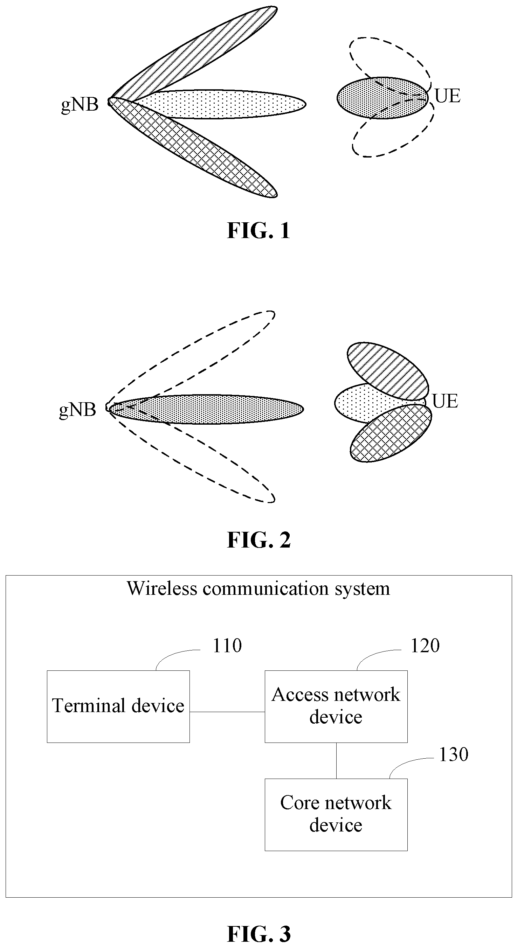

FIG. 1 is a diagram of a P-2 beam management process. As shown in FIG. 1, it is assumed that the base station is a next-generation NodeB (gNB). In the P-2 beam management process, the gNB configures a higher-layer parameter resource set Non-Zero Power-CSI-RS-ResourceSet (NZP-CSI-RS-ResourceSet), where each resource set includes multiple channel state information reference signals (CSI-RSs) or synchronization signal block (SSB) resources transmitted using different transmit beams, and the UE receives and measures the CSI-RSs or SSB resources using a fixed receive beam to complete the transmit beam measurement process. In addition, if the gNB does not provide auxiliary information for the UE-side receive beam, the UE may need to patrol the receive beam, that is, the CSI-RS resource set used for beam management is repeatedly transmitted multiple times, and the UE receives the CSI-RS resource set using different receive beams, thereby achieving the scanning of the receive beams.

FIG. 2 is a diagram of a P-3 beam management process. As shown in FIG. 1, it is assumed that the base station is a gNB. In the P-3 beam management process, the gNB configures a higher-layer parameter resource set NZP-CSI-RS-ResourceSet, where each resource set includes multiple CSI-RSs or SSB resources transmitted using the same transmit beam, and the UE receives and measures the CSI-RSs or SSB resources using different receive beams to achieve the scanning of the receive beams. In addition, the gNB may need to patrol transmit beams, that is, multiple CSI-RS resource sets using different transmit beams for transmission are configured to achieve the scanning of transmit beams.

Since beams are usually selected from a predetermined analog beam codebook, exhaustive scanning of all transmit and receive beams in the codebook is an optimal beam training scheme. However, this may result in excessive training overheads, excessive measurement power consumption, and processing delays.

The signaling sending method and signaling receiving method according to the present application may be applied to various types of wireless communication systems, such as a Long-Term Evolution (LTE) system, a 4th-generation mobile communication technology (4G) system, a 5th-generation mobile communication technology (5G) system, an LTE and 5G hybrid architecture system, a 5G New Radio (NR) system, and a new communication system emerging in future communication development, for example, a 6th-generation mobile communication technology (6G) system. FIG. 3 is a diagram illustrating the networking of a wireless communication system according to an embodiment. As shown in FIG. 3, the wireless communication system includes a terminal device 110, an access network device 120, and a core network device 130.

The terminal device 110 may be a device having radio transceiving functions. The device may be deployed on land (such as being indoor or outdoor, handled, wearable, or vehicle-mounted); may be deployed on water (such as in ships); and may also be deployed in the air (such as in airplanes, balloons, and satellites). Examples of some terminal devices 110 are as follows: UE, a mobile phone, a mobile station, a tablet computer, a notebook computer, an ultra-mobile personal computer (UMPC), a handheld computer, a netbook, a personal digital assistant (PDA), and other user equipment that can be networked; a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an IoT node in the Internet of Things (IoT); an in-vehicle communication apparatus in the Internet of Vehicles; an entertainment and game device or system; or a global positioning system device. The embodiments of the present application do not limit the technology and the device configuration used by the terminal device 110. Additionally, the terminal device 110 may be referred to as a terminal.

The access network device 120 is an access device through which the terminal device 110 wirelessly accesses the wireless communication system and may be a base station, an evolved base station (evolved NodeB, eNB, or eNodeB) in Long Term Evolution Advanced (LTE-A), a transmission reception point (TRP), a base station or gNB in the 5G mobile communication system, a base station in a future mobile communication system, or an access node in a Wireless Fidelity (Wi-Fi) system. The base station may include various network-side devices such as a macro base station, a micro base station, a Home Node B, a radio remote, a router, a Wi-Fi device, or a primary cell and a secondary cell, and location management function (LMF) devices. The access network device 120 may also be a module or unit that performs part of functions of the base station, for example, a central unit (CU) or a distributed unit (DU). The embodiments of the present application do not limit the technology and the device configuration used by the access network device. Additionally, the access network device may be referred to as a base station.

The core network device 130 may include an access and mobility management network element and a session management network element. Illustratively, the terminal device 110 may access the core network through the access network device 120, thereby enabling data transmission.

In the embodiments of the present application, a signaling sending method, a signaling receiving method, a communication node, and a storage medium that can run in the preceding wireless communication system are provided. Compared with the conventional exhaustive scanning method, the present application only needs to send or measure beams at part of moments and predict beams at another moment to reduce beam training overheads on the time domain, improve the beam alignment accuracy, and acquire a satisfactory beamforming gain and spectral efficiency in the case of smaller beam training overheads.

The signaling sending method, the signaling receiving method, the communication node, and the technical effects thereof are described below.

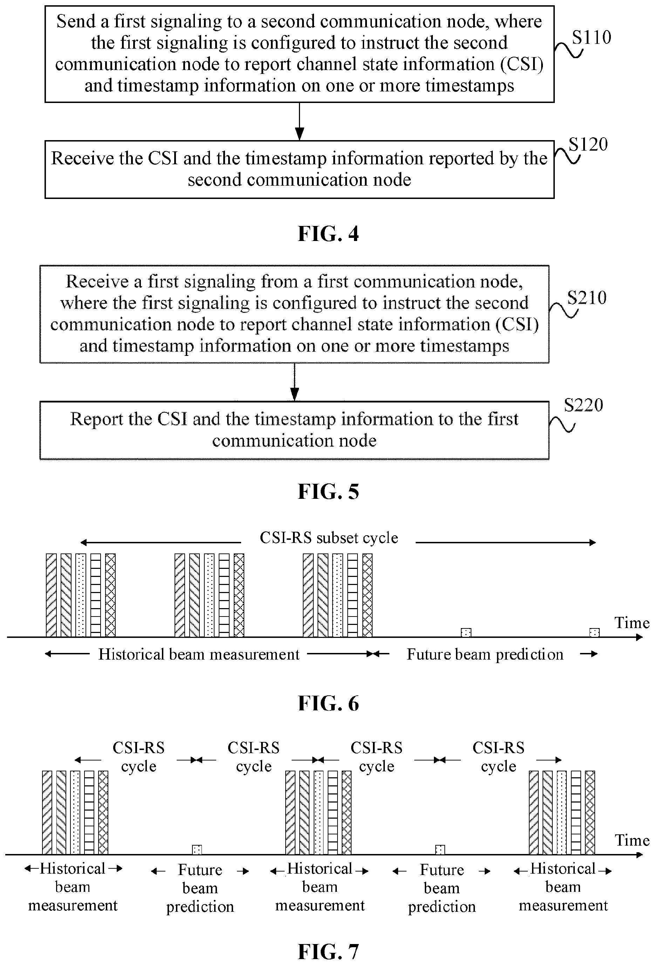

FIG. 4 is a flowchart of a signaling sending method according to an embodiment. As shown in FIG. 4, the method provided in this embodiment is applicable to a first communication node. In this example, the first communication node (which may also be referred to as a first communication node device) may be a base station, and a second communication node (which may also be referred to as a second communication node device) may be a terminal device. The method includes the operations below.

In S110, a first signaling is sent to a second communication node, where the first signaling is configured to instruct the second communication node to report channel state information (CSI) and timestamp information on one or more timestamps.

The solution provided by the embodiment of the present application is applied to a beam management method based on artificial intelligence (AI) and involves a complete set of beam scanning, measurement, and reporting procedures.

The present application implements beam prediction by the first communication node or the second communication node through the transmission of signaling between the first communication node and the second communication node. When beam prediction is implemented by the first communication node, the CSI and timestamp information reported by the second communication node are CSI and timestamp information measured by the second communication node. When beam prediction is implemented by the second communication node, CSI and timestamp information reported by the second communication node are CSI and timestamp information predicted by the second communication node.

In an embodiment, the channel state information (CSI) includes at least one of the following: reference signal received power (RSRP), channel state information-reference signal resource indicator (CRI), reference signal received quality (RSRQ), a received signal of a reference signal, signal-to-interference-plus-noise ratio (SINR), or signal-to-noise ratio (SNR).

In an embodiment, the timestamp information includes at least one of the following: slot index or slot number, subframe index or subframe number, symbol index or symbol number.

An example is used where the CSI includes RSRP. In the present application, the first signaling is configured to indicate that the RSRP reported by the second communication node may be the strongest RSRP on one or more timestamps or may be the RSRP whose strength is in the top K positions on one or more timestamps, where K ≥ 2, and K is an integer.

In addition, the first signaling is also configured to instruct the second communication node to report RSRP of fixed CRI or RSRP of a fixed transmit beam or RSRP of a fixed transmit and receive beam pair to track the movement trajectory of the second communication node and assist in AI prediction.

In S 120, the CSI and the timestamp information reported by the second communication node are received.

In an embodiment, before S120 is executed, the first communication node may also send a second signaling to the second communication node, where the second signaling is configured to indicate that the receive beam of the second communication node remains unchanged. The object is as follows: If the receive beam of the second communication node changes, the CSI and timestamp information reported by the second communication node may become invalid.

In an embodiment, the commonality of the preceding embodiments of the present application lies in that the CSI-RS resource does not need to be sent at some moments. Therefore, for a semi-persistent CSI-RS resource or semi-persistent CSI report, the first communication node may also send a third signaling to the second communication node, where the third signaling is configured to indicate at least one of an activation cycle or a deactivation cycle in one beam prediction process.

The third signaling may be indicated in any one of the following three manners:
In manner 1, if the activation cycle and the deactivation cycle are consecutive, the third signaling includes at least one of an activation cycle number M or a deactivation cycle number N, where N and M are each a positive integer.
In manner 2, if the activation cycle and the deactivation cycle are non-consecutive, the third signaling is indicated by a bitmap.
In manner 3, if the CSI-RS is an aperiodic CSI-RS, the third signaling includes configuring at least one of a bitmap of CSI-RS resources, a repetition number of the CSI-RS resources, a bitmap of CSI-RS resource sets, or a repetition number of the CSI-RS resource sets.

In an embodiment, for the time domain beam prediction, the present application defines a new type of channel state information reference signal resource set (CSI-RS resource set), that is, an attribute of an aperiodic CSI-RS resource set, an attribute of a periodic CSI-RS resource set, and an attribute of a semi-persistent CSI-RS resource set are defined at a hierarchy of a resource subset.

The configuration parameter in the resource subset includes at least one of the following: repetition number or repetition factor, offset, or bitmap.

FIG. 5 is a flowchart of a signaling receiving method according to an embodiment. As shown in FIG. 5, the method provided in this embodiment is applicable to a second communication node. In this example, the first communication node (which may also be referred to as a first communication node device) may be a base station, and the second communication node (which may also be referred to as a second communication node device) may be a terminal device. The method includes the operations below.

In S210, a first signaling sent by a first communication node is received, where the first signaling is configured to instruct the second communication node to report channel state information (CSI) and timestamp information on one or more timestamps.

The solution provided by the embodiment of the present application is applied to a beam management method based on AI and involves a complete set of beam scanning, measurement, and reporting procedures.

The present application implements beam prediction by the first communication node or the second communication node through the transmission of signaling between the first communication node and the second communication node. When beam prediction is implemented by the first communication node, the CSI and timestamp information reported by the second communication node are CSI and timestamp information measured by the second communication node. When beam prediction is implemented by the second communication node, CSI and timestamp information reported by the second communication node are CSI and timestamp information predicted by the second communication node.

In an embodiment, the CSI includes at least one of the following: RSRP, CRI, RSRQ, a received signal of a reference signal, SINR, or SNR.

In an embodiment, the timestamp information includes at least one of the following: slot index or slot number, subframe index or subframe number, symbol index or symbol number.

An example is used where the CSI includes RSRP. In the present application, the first signaling is configured to indicate that the RSRP reported by the second communication node may be the strongest RSRP on one or more timestamps or may be the RSRP whose strength is in the top K positions on one or more timestamps, where K ≥ 2, and K is an integer.

In addition, the first signaling is also configured to instruct the second communication node to report RSRP of fixed CRI or RSRP of a fixed transmit beam or RSRP of a fixed transmit and receive beam pair to track the movement trajectory of the second communication node and assist in AI prediction.

In S220, the CSI and the timestamp information are reported to the first communication node.

In an embodiment, before S220 is executed, the second communication node may also receive a second signaling sent by the first communication node, where the second signaling is configured to indicate that the receive beam of the second communication node remains unchanged. The object is as follows: If the receive beam of the second communication node changes, the CSI and timestamp information reported by the second communication node may become invalid.

In an embodiment, the commonality of the preceding embodiments of the present application lies in that the CSI-RS resource does not need to be sent at some moments. Therefore, for a semi-persistent CSI-RS resource or semi-persistent CSI report, the second communication node may also receive a third signaling sent by the first communication node, where the third signaling is configured to indicate at least one of an activation cycle or a deactivation cycle in one beam prediction process.

The third signaling may be indicated in any one of the following three manners:
In manner 1, if the activation cycle and the deactivation cycle are consecutive, the third signaling includes at least one of an activation cycle number M or a deactivation cycle number N, where N and M are each a positive integer.
In manner 2, if the activation cycle and the deactivation cycle are non-consecutive, the third signaling is indicated by a bitmap.
In manner 3, if the CSI-RS is an aperiodic CSI-RS, the third signaling includes configuring at least one of a bitmap of CSI-RS resources, a repetition number of the CSI-RS resources, a bitmap of CSI-RS resource sets, or a repetition number of the CSI-RS resource sets.

In an embodiment, for the time domain beam prediction, the present application defines a new type of CSI-RS resource set, that is, an attribute of an aperiodic CSI-RS resource set, an attribute of a periodic CSI-RS resource set, and an attribute of a semi-persistent CSI-RS resource set are defined at a hierarchy of a resource subset.

The configuration parameter in the resource subset includes at least one of the following: repetition number or repetition factor, offset, or bitmap.

Some example embodiments are listed below to illustrate the signaling sending method and the signaling receiving method in the preceding embodiments of the present application. The example embodiments below may be implemented independently or in combination. In the example embodiments below, the first communication node is denoted as a base station, and the second communication node is denoted as UE.

In a first example embodiment, it is assumed that the base station implements AI-based beam prediction. For the CSI reporting setting, the base station sends a first signaling to the UE, and the first signaling is configured to instruct the UE to report CSI and timestamp information on one or more timestamps. The UE reports CSI and timestamp information to the base station according to the first instruction to reduce the number of reporting times. The CSI includes at least one of the following: RSRP, CRI, RSRQ, a received signal of a reference signal, SINR, or SNR. The timestamp information includes at least one of the following: slot index or slot number, subframe index or subframe number, symbol index or symbol number.

For example, FIG. 6 is a diagram of beam prediction according to an embodiment. As shown in FIG. 6, it is assumed that the transmit slot index of a periodic CSI-RS is 1, 2, or 3 ... (that is, the cycle is 1), and one CSI-RS resource subset cycle includes five slots, that is, the repetition number of the CSI-RS subset is 5. The base station instructs the UE to report the CSI on time slots 1, 2, and 3. Therefore, the UE reports the CSI (for example, CRI/RSRP) on slot 1 and the corresponding time slot index 1, CSI (for example, CRI/RSRP) on time slot 2 and the corresponding time slot index 2, and CSI (for example, CRI/RSRP) on slot 3 and the corresponding time slot index 3 to the base station so that the base station can predict the optimal beams of time slot indexes 4 and 5 accordingly.

For another example, FIG. 7 is a diagram of another beam prediction according to an embodiment. As shown in FIG. 7, it is assumed that the transmit slot index of a periodic CSI-RS is 1, 2, or 3 ... (that is, the cycle is 1), and one CSI-RS cycle includes one slot. The base station instructs the UE to report the CSI on time slots 1, 3, and 5. Therefore, the UE reports the CSI (for example, CRI/RSRP) on slot 1 and the corresponding time slot index 1, CSI (for example, CRI/RSRP) on time slot 3 and the corresponding time slot index 3, and CSI (for example, CRI/RSRP) on slot 5 and the corresponding time slot index 5 to the base station so that the base station can predict the optimal beam of time slot index 6 accordingly.

Alternatively, the base station instructs the UE to report the CSI on time slots 3, 5, and 7. Therefore, the UE reports the CSI (for example, CRI/RSRP) on slot 3 and the corresponding time slot index 3, CSI (for example, CRI/RSRP) on time slot 5 and the corresponding time slot index 5, and CSI (for example, CRI/RSRP) on slot 7 and the corresponding time slot index 7 to the base station so that the base station can predict the optimal beam of time slot index 8 accordingly. The rest can be processed in the same manner.

Similarly, it is assumed that the UE implements AI-based beam prediction. The diagram of beam prediction shown in FIG. 6 is used as an example. The base station instructs the UE to report the CSI on time slots 4 and 5. Therefore, the UE predicts the optimal beams of time slot indexes 4 and 5 based on the CSI (for example, CRI/RSRP) on slot 1 and the corresponding time slot index 1, CSI (for example, CRI/RSRP) on time slot 2 and the corresponding time slot index 2, and CSI (for example, CRI/RSRP) on slot 3 and the corresponding time slot index 3. Then the UE reports the predicted CSI (for example, CRI/RSRP) on slot 4 and the corresponding time slot index 4 as well as the CSI (for example, CRI/RSRP) on time slot 5 and the corresponding time slot index 5 to the base station.

In an embodiment, the CRI/RSRP reported by the UE may be the strongest CRI/RSRP on one or more timestamps or may be the CRI/RSRP whose strength is among the top K positions on one or more timestamps, where K ≥ 2, and K is an integer. In addition, the UE also reports the CRI/RSRP of fixed CRI or CRI/RSRP of a fixed transmit beam or CRI/RSRP of a fixed transmit and receive beam pair to track the movement trajectory of the UE and assist in AI prediction.

Throughout the entire time domain beam prediction process (multiple measurement cycles), the base station indicates, by the higher-layer signaling, that the receive beam of the UE remains unchanged. Otherwise, the reported CRI/RSRP may be meaningless.

In a second example embodiment, with reference to the first example embodiment, the commonality of the preceding embodiments lies in that the CSI-RS resource does not need to be sent at some moments. Since an AI model based on the recurrent neural network (RNN) has input and output of a certain length, it is assumed that the input of the AI model is defined as the optimal beam index of M cycles, and the output is the optimal beam index of N cycles in the future. Therefore, for a semi-persistent CSI-RS resource or semi-persistent CSI report, the base station may also send a third signaling to the UE, where the third signaling is configured to indicate at least one of an activation cycle or a deactivation cycle in one beam prediction process, that is, at least one of a media access control-control element (MAC CE) activation cycle or a deactivation cycle is specified.

The third signaling may be indicated in any one of the following three manners:
(1) If the activation cycle and the deactivation cycle are consecutive, the third signaling includes at least one of an activation cycle number M or a deactivation cycle number N, where N and M are each a positive integer.

In this manner, the third signaling includes at least one of an activation cycle number M or a deactivation cycle number N. In other words, deactivation is performed automatically after activation is performed for M cycles; alternatively, re-activation is performed automatically after deactivation is performed for N cycles; alternatively, deactivation is performed automatically for N cycles after activation is performed for M cycles (that is, the time domain beam prediction process is activated once).

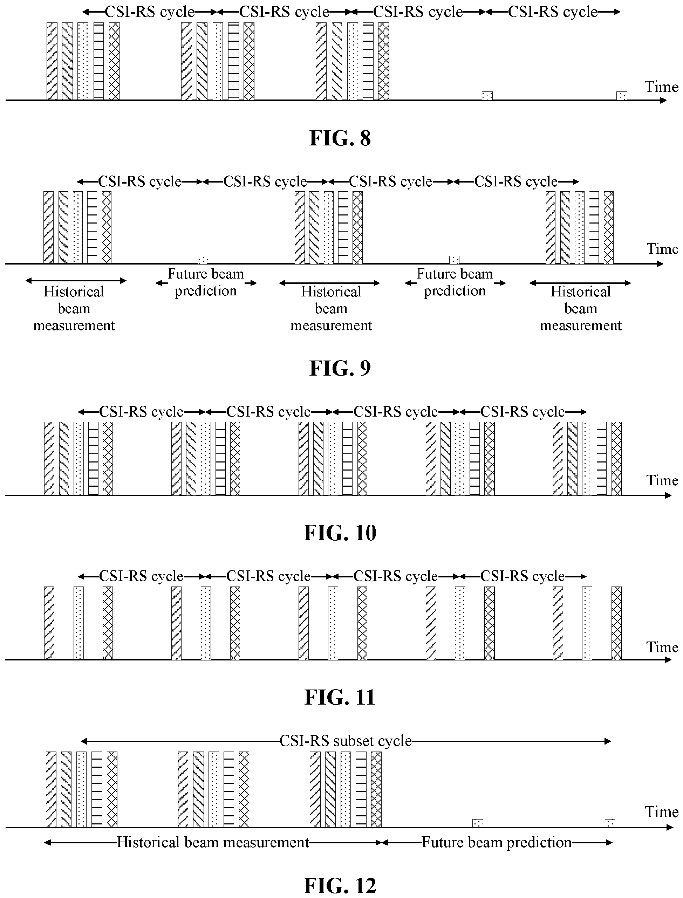

FIG. 8 is a diagram of an activation cycle and a deactivation cycle according to an embodiment. As shown in FIG. 8, it is assumed that the transmit slot index of a periodic CSI-RS is 1, 2, or 3, ... (that is, the cycle is 1), and one CSI-RS cycle includes one slot index. The third signaling includes an activation cycle 3 and a deactivation cycle 2, that is, in one beam prediction process, 3 CSI-RS resource set cycles are activated, and then 2 CSI-RS resource set cycles are automatically deactivated, and the cycle of one beam prediction process is 5 CSI-RS resource set cycles.

(2) If the activation cycle and the deactivation cycle are non-consecutive, the third signaling is indicated by a bitmap.

In this manner, the third signaling uses the bitmap for indication, that is, the third signaling indicates the activation/deactivation pattern using the bitmap. Illustratively, 1 in the bitmap indicates activation, and 0 in the bitmap indicates deactivation.

FIG. 9 is a diagram of another activation cycle and another deactivation cycle according to an embodiment. As shown in FIG. 9, it is assumed that the transmit slot index of a periodic CSI-RS is 1, 2, or 3 ... (that is, the cycle is 1), and one CSI-RS cycle includes one slot. The bitmap of the third signaling is configured as 10101, that is, in one beam prediction process, the first, the third, and the fifth CSI-RS resource set cycles are activation cycles, the second and the fourth CSI-RS resource set cycles are deactivation cycles, and the cycle of one beam prediction process is 5 CSI-RS resource set cycles.

(3) If the CSI-RS is an aperiodic CSI-RS, the third signaling includes configuring at least one of a bitmap of CSI-RS resources, a repetition number of the CSI-RS resources, a bitmap of CSI-RS resource sets, or a repetition number of the CSI-RS resource sets.

In this manner, FIG. 8 is used as an example, the repetition number is 3, and the UE may report CSI to the base station according to the repetition number of CSI-RS resource sets or the repetition number of the CSI-RS resources. Alternatively, FIG. 9 is used as an example, the repetition number is 5, the bitmap is configured as 10101, and the UE may be configured with the CSI-RS resource sets or the CSI-RS resources in combination with the repetition number 5 and the bitmap 10101. Alternatively, FIG. 9 is used as an example, the repetition number may also be understood as 3, which describes the number of actual repeated transmissions of the CSI-RS resource sets or the number of actual repeated transmissions of the CSI-RS resources, and the bitmap is 10101.

In a third example embodiment, for the time domain beam prediction, the present application defines a new type of CSI-RS resource set, that is, an attribute of an aperiodic CSI-RS resource set, an attribute of a periodic CSI-RS resource set, and an attribute of a semi-persistent CSI-RS resource set are defined at a hierarchy of a resource subset.

FIG. 10 is a diagram of a periodic CSI-RS resource according to an embodiment. FIG. 11 is a diagram of CSI-RS resources in the case of spatial domain beam prediction according to an embodiment. With reference to FIG. 10 and FIG. 11, it can be learned that concerning a periodic CSI-RS resource, the target spatial beams within each time slot can be predicted based on the measured beams within each time slot in the case of spatial domain beam prediction.

For a CSI-RS resource in the case of time domain beam prediction, an attribute of an aperiodic ZP CSI-RS, an attribute of a periodic ZP CSI-RS, and an attribute of a semi-persistent ZP CSI-RS are defined at a hierarchy of a resource subset. FIG. 12 is a diagram of a CSI-RS resource subset in the case of time domain beam prediction according to an embodiment. Illustratively, the entire resource subset shown in FIG. 12 is used as a whole (that is, a configuration cycle). In addition, for the entire resource subset shown in FIG. 12, the following parameters are configured: repetition number or repetition factor, offset, or bitmap. Offset indicates the resource location. The bitmap is 0, indicating that a reference signal resource is not sent at this location; the bitmap is 1, indicating that a reference signal resource is sent.

For example, 5 positions of beam scanning (the first 3 positions are with beam scanned, and the last 2 positions are not with beam scanned) are taken as a whole in FIG. 12, the repetition number is 5, and the bitmap is 11100, while the offset parameter is defined at a hierarchy of a resource set. It is assumed that 5 positions of beam scanning are consecutive slots, and the configured offset for the first CSI-RS resource set is 0, the configured offset for the second CSI-RS resource set is 1, and the configured offset for the third CSI-RS resource set is 2.

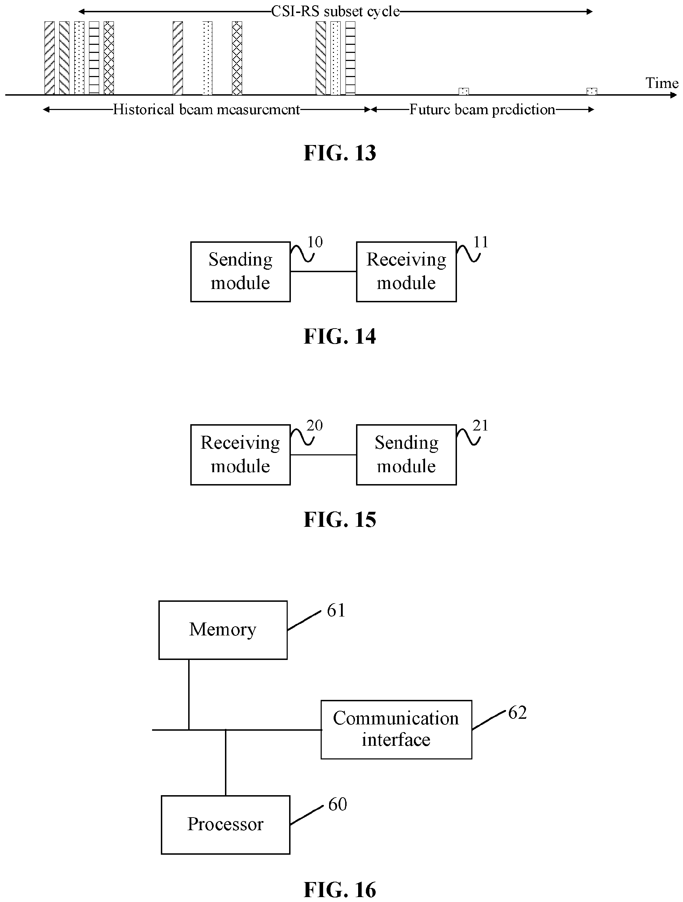

In the present application, the spatial domain beam prediction and the time domain beam prediction may also be combined, and sampling beams are only sent at some moments to reduce overheads. FIG. 13 is a diagram of a CSI-RS resource subset that combines spatial domain beam prediction and time domain beam prediction according to an embodiment. In the case of a combination of spatial domain beam prediction and time domain beam prediction, a second-level bitmap may be used to indicate the locations of sampling beams (that is, the locations of historical beam measurements). As shown in FIG. 13, the first-level bitmap is 11100, and for the first beam scanning in FIG. 13, the second-level bitmap is 11111; for the second beam scanning, the second-level bitmap is 10101; for the third beam scanning, the second-level bitmap is 01110.

In addition, for CSI reporting, the aperiodic, periodic, and semi-persistent attributes of CSI reporting are defined at a hierarchy of a resource subset. The principles are similar to those described in the preceding embodiments and are not repeated herein for simplicity.

FIG. 14 is a diagram illustrating the structure of a signaling sending apparatus according to an embodiment. The apparatus may be configured in a first communication node. As shown in FIG. 14, the apparatus includes a sending module 10 and a receiving module 11.

The sending module 10 is configured to send a first signaling to a second communication node, where the first signaling is configured to instruct the second communication node to report channel state information (CSI) and timestamp information on one or more timestamps. The receiving module 11 is configured to receive the CSI and the timestamp information reported by the second communication node.

The signaling sending apparatus provided in this embodiment is configured to perform the signaling sending method in the embodiment shown in FIG. 4. The implementation principles and technical effects of the signaling sending apparatus provided by this embodiment are similar to those of the preceding embodiments and are not repeated herein.

In an embodiment, the CSI includes at least one of the following: reference signal received power (RSRP), channel state information-reference signal resource indicator (CRI), reference signal received quality (RSRQ), a received signal of a reference signal, signal-to-interference-plus-noise ratio (SINR), or signal-to-noise ratio (SNR).

In an embodiment, the timestamp information includes at least one of the following: slot index or slot number, subframe index or subframe number, symbol index or symbol number.

In an embodiment, the first signaling is also configured to instruct the second communication node to report RSRP of fixed CRI or RSRP of a fixed transmit beam or RSRP of a fixed transmit and receive beam pair.

In an embodiment, the sending module 10, before the receiving module 11 receives the CSI and the timestamp information reported by the second communication node, is also configured to send a second signaling to the second communication node, where the second signaling is configured to indicate that the receive beam of the second communication node remains unchanged.

In an embodiment, for a semi-persistent CSI-RS resource or semi-persistent CSI report, the sending module 10 is also configured to send a third signaling to the second communication node, where the third signaling is configured to indicate at least one of an activation cycle or a deactivation cycle in one beam prediction process.

In an embodiment, the third signaling is indicated in any of the following manners:
If the activation cycle and the deactivation cycle are consecutive, the third signaling includes at least one of an activation cycle number M or a deactivation cycle number N, where N and M are each a positive integer. If the activation cycle and the deactivation cycle are non-consecutive, the third signaling is indicated by a bitmap. If the CSI-RS is an aperiodic CSI-RS, the third signaling includes configuring at least one of a bitmap of CSI-RS resources, a repetition number of the CSI-RS resources, a bitmap of CSI-RS resource sets, or a repetition number of the CSI-RS resource sets.

In an embodiment, for a time domain beam prediction, an attribute of an aperiodic CSI-RS resource set, an attribute of a periodic CSI-RS resource set, and an attribute of a semi-persistent CSI-RS resource set are defined at a hierarchy of a resource subset.

In an embodiment, the configuration parameter in the resource subset includes at least one of the following: repetition number or repetition factor, offset, or bitmap.

FIG. 15 is a diagram illustrating the structure of a signaling receiving apparatus according to an embodiment. The apparatus may be configured in a second communication node. As shown in FIG. 15, the apparatus includes a receiving module 20 and a sending module 21.

The receiving module 20 is configured to receive a first signaling sent by a first communication node, where the first signaling is configured to instruct the second communication node to report channel state information (CSI) and timestamp information on one or more timestamps. The sending module 21 is configured to report the CSI and the timestamp information to the first communication node.

The signaling receiving apparatus provided in this embodiment is configured to perform the signaling receiving method in the embodiment shown in FIG. 5. The implementation principles and technical effects of the signaling receiving apparatus provided by this embodiment are similar to those of the preceding embodiments and are not repeated herein.

In an embodiment, the CSI includes at least one of the following: reference signal received power (RSRP), channel state information-reference signal resource indicator (CRI), reference signal received quality (RSRQ), a received signal of a reference signal, signal-to-interference-plus-noise ratio (SINR), or signal-to-noise ratio (SNR).

In an embodiment, the timestamp information includes at least one of the following: slot index or slot number, subframe index or subframe number, symbol index or symbol number.

In an embodiment, the first signaling is also configured to instruct the second communication node to report RSRP of fixed CRI or RSRP of a fixed transmit beam or RSRP of a fixed transmit and receive beam pair.

In an embodiment, the receiving module 20, before the sending module 21 reports the CSI and the timestamp information to the first communication node, is also configured to receive a second signaling sent by the first communication node, where the second signaling is configured to indicate that the receive beam of the second communication node remains unchanged.

In an embodiment, for a semi-persistent CSI-RS resource or semi-persistent CSI report, the receiving module 20 is also configured to receive a third signaling sent by the first communication node, where the third signaling is configured to indicate at least one of an activation cycle or a deactivation cycle in one beam prediction process.

In an embodiment, the third signaling is indicated in any of the following manners:
If the activation cycle and the deactivation cycle are consecutive, the third signaling includes at least one of an activation cycle number M or a deactivation cycle number N, where N and M are each a positive integer. If the activation cycle and the deactivation cycle are non-consecutive, the third signaling is indicated by a bitmap. If the CSI-RS is an aperiodic CSI-RS, the third signaling includes configuring at least one of a bitmap of CSI-RS resources, a repetition number of the CSI-RS resources, a bitmap of CSI-RS resource sets, or a repetition number of the CSI-RS resource sets.

In an embodiment, for a time domain beam prediction, an attribute of an aperiodic CSI-RS resource set, an attribute of a periodic CSI-RS resource set, and an attribute of a semi-persistent CSI-RS resource set are defined at a hierarchy of a resource subset.

In an embodiment, the configuration parameter in the resource subset includes at least one of the following: repetition number or repetition factor, offset, or bitmap.

An embodiment of the present application also provides a communication node. The communication node includes a processor, which is configured to, when executing a computer program, perform the method provided in any embodiment of the present application. The communication node may be an access network device or a terminal device provided in any embodiment of the present application, which is not limited in the present application.

Illustratively, the following embodiments separately provide a diagram illustrating the structure of a communication node as a base station or as UE.

FIG. 16 is a diagram illustrating the structure of a base station according to an embodiment. As shown in FIG. 16, the base station includes a processor 60, a memory 61, and a communication interface 62. One or more processors 60 may be provided in the base station, and one processor 60 is used as an example in FIG. 16. The processor 60, the memory 61, and the communication interface 62 that are in the base station may be connected through a bus or in other manners. In FIG. 16, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method in the embodiments of the present application. The processor 60 runs the software programs, instructions, and modules stored in the memory 61 to execute at least one of function applications and data processing of the base station, that is, to implement the method described above.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed with respect to the processor 60. These remote memories may be connected to the base station via a network. Examples of the preceding network include but are not limited to, the Internet, an intranet, a network, a communication network, and a combination thereof.

The communication interface 62 may be configured to receive and send data.

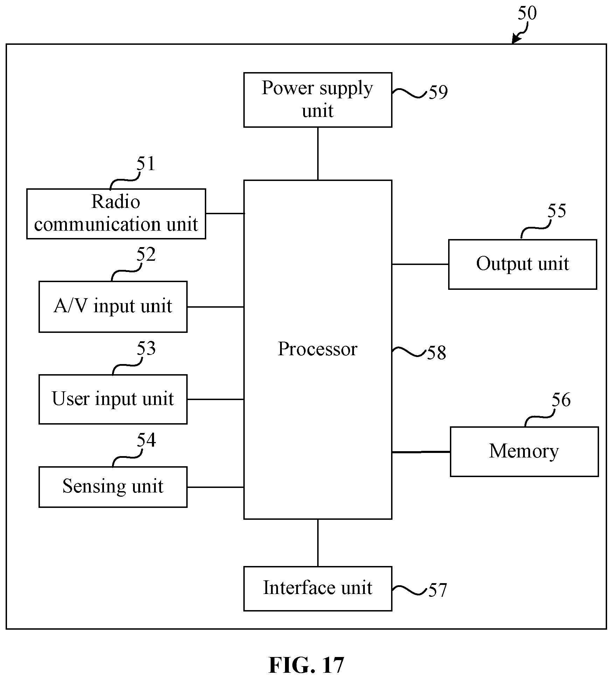

FIG. 17 is a diagram illustrating the structure of UE according to an embodiment. The UE may be implemented in multiple forms. The UE in the present application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 17, UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 17 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

The embodiments of the present application also provide a computer-readable storage medium. The computer-readable storage medium is configured to store a computer program that, when executed by a processor, implements the method provided by any one of the embodiments of the present application.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer-readable storage medium includes (a non-exhaustive list) an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable to the local technical environment, such as, but is not limited to, a general purpose computer, a special purpose computer, a microprocessor, a digital signal processing (DSP), an application specific integrated circuit (ASIC), a field-programmable gate array (FPGA), and a processor based on a multi-core processor architecture.

## Claims

1. A signaling sending method, applied to a first communication node and comprising:
sending a first signaling to a second communication node, wherein the first signaling is configured to instruct the second communication node to report channel state information, CSI, and timestamp information on at least one timestamp; and
receiving the CSI and the timestamp information reported by the second communication node.

2. The method of claim 1, wherein the CSI comprises at least one of the following: reference signal received power, RSRP, channel state information-reference signal resource indicator, CRI, reference signal received quality, RSRQ, a received signal of a reference signal, signal-to-interference-plus-noise ratio, SINR, or signal-to-noise ratio, SNR.

3. The method of claim 1, wherein the timestamp information comprises at least one of the following: slot index or slot number, subframe index or subframe number, symbol index or symbol number.

4. The method of claim 1, wherein the first signaling is further configured to instruct the second communication node to report RSRP of a fixed CRI or RSRP of a fixed transmit beam or RSRP of a fixed transmit and receive beam pair.

5. The method of claim 1, before receiving the CSI and the timestamp information reported by the second communication node, further comprising:
sending a second signaling to the second communication node, wherein the second signaling is configured to indicate that a receive beam of the second communication node remains unchanged.

6. The method of claim 1, for a semi-persistent CSI-RS resource or semi-persistent CSI report, further comprising:
sending a third signaling to the second communication node, wherein the third signaling is configured to indicate at least one of an activation cycle or a deactivation cycle in one beam prediction process.

7. The method of claim 6, wherein the third signaling is indicated in one of following manners:
in response to the activation cycle and the deactivation cycle being consecutive, the third signaling comprises at least one of an activation cycle number M or a deactivation cycle number N, wherein N and M are each a positive integer;
in response to the activation cycle and the deactivation cycle being non-consecutive, the third signaling is indicated by a bitmap; or
in response to a CSI-RS being an aperiodic CSI-RS, the third signaling comprises configuring at least one of a bitmap of CSI-RS resources, a repetition number of the CSI-RS resources, a bitmap of CSI-RS resource sets, or a repetition number of the CSI-RS resource sets.

8. The method of claim 1, wherein for a time domain beam prediction, an attribute of an aperiodic CSI-RS resource set, an attribute of a periodic CSI-RS resource set, and an attribute of a semi-persistent CSI-RS resource set are defined at a hierarchy of a resource subset.

9. The method of claim 8, wherein a configuration parameter in the resource subset comprises at least one of the following: repetition number or repetition factor, offset, or bitmap.

10. A signaling receiving method, applied to a second communication node and comprising:
receiving a first signaling from a first communication node, wherein the first signaling is configured to instruct the second communication node to report channel state information, CSI, and timestamp information on at least one timestamp; and
reporting the CSI and the timestamp information to the first communication node.

11. The method of claim 10, wherein the CSI comprises at least one of the following: reference signal received power, RSRP, channel state information-reference signal resource indicator, CRI, reference signal received quality, RSRQ, a received signal of a reference signal, signal-to-interference-plus-noise ratio, SINR, or signal-to-noise ratio, SNR.

12. The method of claim 10, wherein the timestamp information comprises at least one of the following: slot index or slot number, subframe index or subframe number, symbol index or symbol number.

13. The method of claim 10, wherein the first signaling is further configured to instruct the second communication node to report RSRP of a fixed CRI or RSRP of a fixed transmit beam or RSRP of a fixed transmit and receive beam pair.

14. The method of claim 10, before reporting the CSI and the timestamp information to the first communication node, further comprising:
receiving a second signaling from the first communication node, wherein the second signaling is configured to indicate that a receive beam of the second communication node remains unchanged.

15. The method of claim 10, for a semi-persistent CSI-RS resource or semi-persistent CSI report, further comprising:
receiving a third signaling from the first communication node, wherein the third signaling is configured to indicate at least one of an activation cycle or a deactivation cycle in one beam prediction process.

16. The method of claim 15, wherein the third signaling is indicated in one of following manners:
in response to the activation cycle and the deactivation cycle being consecutive, the third signaling comprises at least one of an activation cycle number M or a deactivation cycle number N, wherein N and M are each a positive integer;
in response to the activation cycle and the deactivation cycle being non-consecutive, the third signaling is indicated by a bitmap; or
in response to the CSI-RS being an aperiodic CSI-RS, the third signaling comprises configuring at least one of a bitmap of CSI-RS resources, a repetition number of the CSI-RS resources, a bitmap of CSI-RS resource sets, or a repetition number of the CSI-RS resource sets.

17. The method of claim 10, wherein for a time domain beam prediction, an attribute of an aperiodic CSI-RS resource set, an attribute of a periodic CSI-RS resource set, and an attribute of a semi-persistent CSI-RS resource set are defined at a hierarchy of a resource subset.

18. The method of claim 17, wherein a configuration parameter in the resource subset comprises at least one of the following: repetition number or repetition factor, offset, or bitmap.

19. A communication node, comprising a processor that is configured to, when executing a computer program, implement the signaling sending method of any one of claims 1 to 9 or implement the signaling receiving method of any one of claims 10 to 18.

20. A computer-readable storage medium storing a computer program that, when executed by a processor, implements the signaling sending method of any one of claims 1 to 9 or implements the signaling receiving method of any one of claims 10 to 18.
